# EUROPEAN PATENT SPECIFICATION

(11) **EP 2 087 015 B1**
(45) Date of publication and mention of the grant of the patent: **28.09.2011**
(21) Application number: 07821795.7
(22) Date of filing: 24.10.2007
(51) Int. Cl.: C08F 10/00, C08F 297/08, C08L 23/00, B01J 8/24, B01J 8/26

(54) **MULTISTAGE PROCESS FOR THE POLYMERIZATION OF OLEFINS**
MEHRSTUFIGES VERFAHREN ZUR POLYMERISATION VON OLEFINEN
PROCESSUS EN PLUSIEURS ÉTAPES DESTINÉS À LA POLYMÉRISATION D'OLÉFINES

(30) Priority: 15.11.2006 EP 06124105
(43) Date of publication of application: 12.08.2009
(73) Proprietor: Basell Poliolefine Italia S.r.l., 20127 Milano (IT)
(72) Inventor: PENZO, Giuseppe, 46047 Montanara di Curtatone, Mantova (IT); RINALDI, Roberto, 46100 Mantova (IT)
(74) Representative: Sacco, Marco
(86) International application number: PCT/EP2007/061432
(87) International publication number: WO 2008/058839

(56) References cited:
- EP-A- 0 318 609
- EP-A- 0 574 821
- WO-A-2006/079774
- WO-A-2008/045173
- US-A- 4 621 952
- US-B1- 6 255 411

## Description

The present invention relates to a multistage process for the polymerisation of olefins. The invention relates also to an apparatus for carrying out such a multistage polymerization process.

The polymerisation of olefins in two or more serially connected gas-phase reactors allows to produce olefin polymers with improved properties and/or to simplify the existing production processes. This is made possible by choosing polymerisation conditions in the second or subsequent reactors different from the reaction conditions existing in the first polymerization reactor. Typically, olefin polymers grow on granules including a catalyst component, which continues to exert a catalytic activity even when the polymer particles are transferred to a successive gas-phase reactor. The polymer resulting from the first gas-phase reactor is transferred to the second gas-phase reactor, where polymerization is continued under different conditions. Therefore, different fractions of polymer can grow on the same catalytic granule by maintaining a different composition of the gas-phase mixture in each reactor.

Examples of polymers that may be produced by a multistage gas-phase process include bimodal or multimodal polymers obtained by maintaining a different concentration of chain terminator, such as hydrogen, in each reactor; and random or heterophasic copolymers obtained by polymerizing different (co)monomers in each reactor. The term "heterophasic copolymer" includes also in-reactor polymer blends.

Depending on the produced polymer, multistage gas-phase processes can have deficiencies with respect to flowability of the polymer, either because the polymer is sticky and has tendency to agglomerate, or because it may be undesirably compacted in certain zones of the apparatus, including the transfer zones from one reactor to the successive one.

The transfer of the polymer from a gas-phase reactor to the other one is a critical step of a multistage polymerization process. A direct discharge of polymer from an upstream reactor to a downstream reactor does not allow to maintain really different polymerization conditions in the downstream reactor, due to the substantial amount of gases and dissolved hydrocarbons associated to the polymer transferred to the downstream reactor.

A solution that has been proposed for a long time is degassing the solid polymer discharged from the upstream reactor, then subjecting the polymer to a compression stage and transferring it to the downstream polymerization reactor.

A process according to the above solution is disclosed in EP-B-192427. The transfer of the polymer to the downstream reactor after the compression stage is performed by means of a gas stream comprising the gas mixture coming from the gas recycle line of the downstream reactor. Said gas mixture has been cooled to a temperature of at least 20°C lower than the temperature of the downstream reactor. The described transfer device comprises at least three separate vessels: a discharge vessel connected to the upstream reactor, equipped with valves to prevent excessive withdrawal of polymer from the upstream reactor; a decompression chamber equipped with valves and connected to the discharge vessel; a compression chamber equipped with valves and connected to the downstream reactor. The path of the polymer through this series of vessels and associated valves and pipes is rather tortuous and, in case of polymers having tendency to be sticky or to be compacted, can generate undesired polymer aggregates and, eventually, chunks that compromise the operation of the plant. Above all, the above transfer device suffers the great disadvantage of failing in providing a continuous transfer of polymer from the upstream gas-reactor reactor to the downstream reactor, as pointed out by the disclosure of EP-B-192427 (col. 14, lines 14-19): all the operations of withdrawal, decompression, compression, transfer and introduction of polymer into the downstream reactor are performed periodically.

A similar transfer device is disclosed in EP-B-050013. According to this patent, the transfer device comprises a container where the polymer is discharged, said container defining an inert gas zone wherein an inert gas is passed upwardly from the bottom to replace most of the reaction gas mixture coming from the upstream reactor. Afterwards the polymer, always maintained in an atmosphere of the above inert gas, is transferred to a small chamber (polymer collection zone), which is connected with the gas reaction mixture coming from the downstream reactor. The replacement of gas reaction mixture with an inert gas helps to reduce or to prevent polymerization in the transfer device, thereby eliminating the deposition of polymer onto the walls of the transfer device and blocking thereof. However, the proposed solution suffers the disadvantage that the reaction gas mixture in the second polymerisation reactor is considerably enriched in said inert gas. This makes it necessary to introduce a considerable additional quantity of olefin monomers in the downstream reactor, which may require an increase of the reactor size or an increase of the total pressure of the gas in this reactor. Moreover, also the transfer device described in EP-B-050013 fails in providing a continuous transfer of polymer from the upstream reactor to the downstream reactor. This is because the small chamber collecting the polymer must be first loaded with the polymer, and only successively the polymer can be discharged therefrom by opening the line connected with the gas reaction mixture from the downstream reactor.

EP-B-503791 relates to a multistage gas-phase process for producing a bimodal ethylene polymer blend in a sequence of two fluidised bed reactors. A high molecular weight (HMW) polyethylene is produced in the first reactor, successively transferred into the second reactor wherein a low molecular weight (LMW) polyethylene is produced. The transfer device comprises a discharge tank for collecting the HMW polymer discharged from the first reactor and a transfer hose connected to the second gas-phase reactor. Periodically, when sufficient HMW polymer is formed in the first reactor, the polymer and catalyst are transferred to the discharge tank, in which the reaction gas entrained with the polymer is vented from the top of the discharge tank. Once the desired amount of polymer has been introduced into the discharge tank, the transfer system to the second reactor is activated by opening a suitable valve to force the HMW polymer into the transfer hose. The transfer hose is therefore isolated from the upstream discharge tank and pressurized with reactor-cycle gas coming from the downstream reactor. The transfer device described in EP 503791 is efficient in preventing the reaction gas of upstream reactor from entering the downstream reactor, however this transfer device cannot ensure a continuous and reliable transfer of polymer between the two gas-phase reactors, since all the operations of polymer -discharge, degassing, pressurization, transfer and introduction of polymer powder into the downstream reactor are performed intermittently.

EF-A-574821 discloses a process and apparatus for the multistage polymerization of olefins, carried out in at least two serially connected gas-phase reactors. In the embodiment shown in Fig. 2 the polymer is discharged from the first gas-phase reactor and is conveyed through a chamber and a transfer line into a gas-solid separation chamber, where the gas is removed and recycled to the first reactor. The bottom of the gas-phase separator has an outlet connected to a single lock-hopper through valves, so that the solids can be fed into the downstream reactor.

Serious disadvantages are associated with the polymer transfer systems disclosed in the above prior art transfer systems. In case a device belonging to the transfer system is badly working or becomes clogged, the whole polymerization plant has to be shut down. Furthermore, from the operative point of view the discontinuous operation of polymer transfer leads to a distinct fluctuation in the level of the polymer bed inside the downstream reactor, when a batch of the polymer product is introduced into the downstream reactor. This fluctuation influences some operative parameters in the downstream reactor and may have a considerable impact on the quality of the produced polymer.

IBM Technical Disclosure Bulletin Vol. 40 No. 09 (September 1997) describes a device for transferring polymer between two fluidised bed reactors connected in series. Granular polymer and reaction gas are intermittently discharged from the upstream reactor to one of two intermediate discharge tanks arranged in parallel, where the gas and polymer separate. Entrained reaction gas is transferred from each discharge tank to a surge tank, where the reaction gas is temporarily stored by equalizing the pressure between the two tanks. Moreover, in order to minimize carryover from the upstream reactor gas to the downstream reactor, the discharge tank is depressurized and a tank filter is connected to each discharge tank to prevent solids from reaching the downstream equipment. The same discharge tank, previously depressurized, is then pressurized with the recycle gas coming from the delivery of the compressor belonging to the downstream reactor. The polymer is therefore transported to the downstream reactor using said recycle gas as the conveying medium. Although being able to transfer the polymer between the two gas-phase reactors in a continuous way, this transfer device results particularly complex due to the presence of many vessels, such as a couple of surge tanks and of a couple of tank filters, which are connected to each intermediate discharge tank. As a consequence, many lines connecting the above vessels and a great number of on/off valves placed on said lines have to be used to achieve a reliable polymer transfer, thus rendering this transfer device particular complex and not easy to be managed.

Therefore, there is the need to provide in a multistage gas-phase polymerization a simpler and reliable device for continuously transferring the polymer particles from an upstream reactor to a downstream reactor, without any undesired alteration of the gas composition in the downstream reactor.

It is an object of the present invention a process for the multistage polymerization of olefins comprising a gas-phase polymerization carried out in at least two serially connected gas-phase reactors, the continuous discharge of polymer and gas reaction mixture from an upstream reactor into a transfer device and the continuous feeding of polymer from said transfer device to a downstream reactor, said transfer device comprising:
a) a separation chamber in which said gas reaction mixture is removed from the polymer;
b) at least a couple of lock hoppers working intermittently in parallel, where one of said lock hoppers is continuously filled with the polymer coming from step a), while simultaneously the other one is continuously pressurized by means of a gas comprising the reaction mixture coming from said downstream reactor.

The process for the polymerisation of olefins according to the present invention comprises a multistage gas-phase polymerization carried out in at least two gas-phase reactors serially connected each other. The process may comprise additional reactor(s), where the polymerization is carried out in the gas-phase or in a liquid medium comprising one or more liquid monomers and optionally, a polymerization diluent. Typically, polymerisation in liquid medium is performed upstream the polymerisation in the gas-phase, and may include a prepolymerisation stage. It is a preferred embodiment of the invention carrying out, upstream multistage gas-phase polymerization, a first step of polymerization in liquid monomer, optionally in the presence of a diluent, carried out in a loop reactor.

The two serially connected gas-phase reactors used in the process of the invention can be any type of gas-phase reactor, for example either a gas-phase fluidized-bed reactor or a stirred bed reactors, wherein a bed of polymer is formed in the presence of a polymerization catalyst. For the purposes of the process of the invention, it is important that most of the reaction fluid is in the gaseous state and the polymer is in particulate form. Also gas-phase polymerization reactors having two distinct interconnected polymerization zones, as described in EP 782587 and EP 1012195, can be suitably used in the process of the invention.

The preferred gas-phase reactors are fluidised bed reactors. This type of reactor is provided with a device to discharge solids from the bottom of the reactor, and with an external recycle line for the reaction gas mixture, equipped with a compressor and a heat exchanger. Such recycle line ensures that the bed of polymer is maintained in a fluidized state.

As the polymerization catalyst, it is possible to use all known types of catalyst which are suitable for olefin polymerization. Particular mention may be made of Ziegler/Natta catalysts, chromium-based Phillips catalysts and single-site catalysts, in particular metallocene catalysts, without being restricted thereto.

The polyolefin grows in the form of granules having a more or less regular morphology and size, depending on the catalyst morphology and size, and on polymerisation conditions. Depending on the catalyst used, the polymer particles usually have a mean size of from a few hundred to a few thousand microns. In the case of chromium catalysts, the mean particles have a size of from about 400 to 600 µm, and in the case of Ziegler/Natta catalysts the mean particle size is about 1200-3000 µm.

According to the present invention at least two gas-phase polymerization reactors are connected by means of a transfer device, which receives a controlled amount of polymer and reaction gas mixture from the upstream gas-phase reactor. The transfer device comprises a separation chamber in which the gas reaction mixture is removed from the polymer (step a), so as to prevent the reaction mixture of upstream reactor from entering the downstream reactor. Different separation techniques can be performed in step a) according to the knowledge of those skilled in the art. Preferably in the separation chamber of step a) the polymer is degassed: the partial pressure of all the components of the gas mixture is decreased, which makes it possible to flash most of the hydrocarbons dissolved in the polymer particles, also those in a liquid form. Such flashing or rapid evaporation of liquid hydrocarbons is associated to a decrease of temperature, which together with a reduced partial pressure of monomers, inhibits continuation of the polymerization reaction in the transfer device of present invention.

The polymerization conditions in both the gas-phase reactors of the invention are such to have a temperature in a range from 50 to 120°C and a pressure in a range from 5 to 40 bar.

Generally, with respect to the polymerization conditions in the upstream reactor the pressure in the separation chamber of step a) is decreased at values close to atmospheric pressure, generally in a range of 0.2 to 3.0 bar, preferably 0.5-2.0 bar. Accordingly, the polymer is continuously degassed in the separation chamber of step a) and continuously transferred to a couple of lock hoppers working intermittently in parallel (step b). Each one of these lock hoppers operates in a continuous way this sequence of operations:
(1) loading with polymer coming from step a), while maintaining the hopper isolated from the downstream reactor;
(2) pressurization by means of a gas comprising the reaction mixture from the downstream reactor, while maintaining the hopper isolated from the separation chamber of step a).

During the pressurization (2) the polymer is also simultaneously discharged from the lock hopper and therefore transferred to the downstream reactor.

When the first compression hopper is involved with step (1), the second one is involved with step (2) and viceversa. This working in parallel maximizes the discharge flow rate from the upstream reactor and optimizes the transfer of polymer, substantially continuous, from the upstream reactor to the downstream reactor. Furthermore, the pressurization by means of a gas mixture coming from the downstream reactor reduces the risk of undesired changes in reaction conditions existing in the downstream gas-phase reactor.

According to a preferred embodiment of the invention, said gas operating the pressurization of the lock hoppers is withdrawn from the recycle line of the downstream reactor at a point downstream the compressor and upstream the heat exchanger. According to this aspect, the portion of the reaction gas mixture fed to the lock hoppers does not undergo any cooling stage, therefore its temperature is substantially not lower than the temperature of the reaction gas mixture in the downstream reactor.

Furthermore, such stream coming from the recycle line of the downstream reactor is preferably fed to the lock hoppers, without any addition of inert gas or make-up monomers. Therefore, its composition is substantially the same as that of the reaction gas mixture within the downstream reactor.

According to another aspect of the invention, the transfer device of the present invention is generally located at a point above the level of the fluidised bed in the downstream reactor, so that the transfer of polymer to the downstream reactor is performed by a combined action of pressure and gravity.

As a result of the process of the invention, the transfer of reaction gas mixture from the upstream reactor A to downstream reactor B is very limited and depends only on degassing pressure adopted in the separation chamber of step a). It has been found that if the degassing pressure in step a) is maintained within the range 0.2-2 bar, it is possible to operate the two gas-phase reactors at different composition conditions, without any significant contamination of downstream reactor B from the reaction gas mixture present in upstream reactor A.

Another advantage of the process according to the invention is that the transfer of polymer from the upstream reactor to the downstream reactor requires neither addition of inert gas in the transfer line, nor a cooling of the gas stream used to transfer the polymer into the downstream reactor.

The invention also relates to an apparatus to perform the above described multistage process for the olefin polymerization, the apparatus comprising at least two serially connected gas-phase reactors and a transfer device transferring the polymer from the upstream reactor to the downstream reactor, each reactor having an external recycle line (R, R') that continuously recycles the fluidization gas through said reactors, said line (R, R') being equipped with a compressor and a heat exchanger downstream said compressor, said transfer device comprising:
- a gas/solid separation chamber placed between said upstream reactor and a couple of lock hoppers;
- a couple of lock hoppers, placed in a parallel arrangement, directly connected to said recycle line R' of said downstream reactor and in connection with the polymerization zone of said downstream reactor wherein each of said lock hoppers is connected to said separation chamber through two separate discharge valves.

In the following of the description, the process and apparatus according to the invention will be described with reference to two fluidised-bed reactors connected in series, it being understood that other gas-phase or liquid reactors can be set upstream and/or downstream the two fluidised-bed reactors.

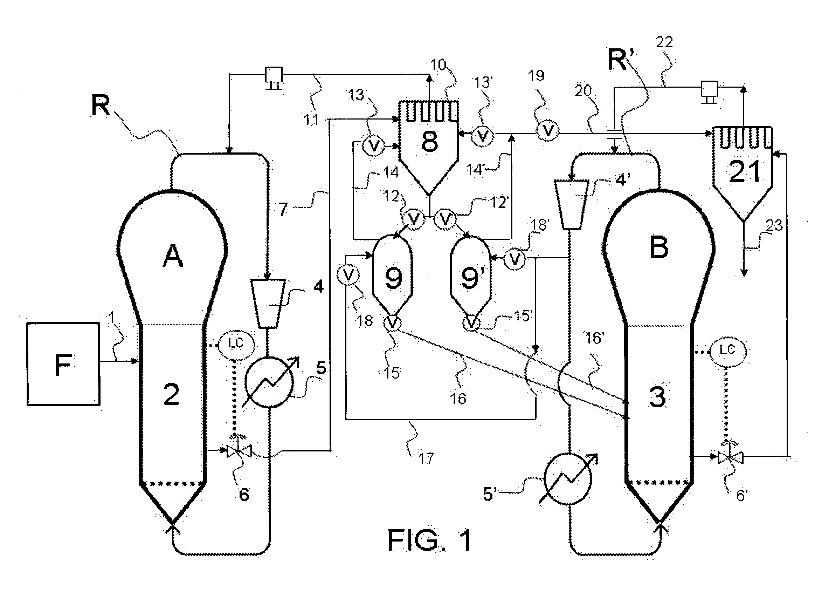

The invention is further illustrated by means of Figure 1, which is a simplified diagram representing a preferred, but non-limiting embodiment of present invention.

In the apparatus schematically represented in Figure 1, A and B are gas-phase fluidised-bed reactors for the polymerisation of olefins. The reactor A may be the first polymerisation reactor of the multistage process, or other reactor(s) can be arranged upstream the reactor A. For the purposes of the present description, the reactor A can receive via line 1 from the upstream device F a polymer produced in an upstream reactor or a prepolymer and/or catalyst components. In the simplified drawing of Figure 1 feed lines for monomer, inert gas, molecular weight regulator and other possible ingredients have been omitted, since they are known to the person skilled in the art. Each fluidized bed reactor A, B is equipped with a recycle line R, R' to continuously recycle the fluidisation gas through the polymer bed 2, 3, respectively. Each recycle line R, R' is equipped with a compressor 4, 4' and a heat exchanger 5, 5' placed downstream the compressor.

The polymer particles produced in reactors A and B are continuously discharged from the bottom of the polymer bed by means of the discharge valves 6, 6' controlled by a level control device LC. This ensures that the level of polymer bed 2, 3 in the reactors A and B, respectively, is kept constant.

The polymer and the accompanying reaction gas mixture is therefore discharged from the reactor A by means of discharge valve 6 and conveyed via line 7 to the transfer device of the present invention, substantially comprising a gas-solid separation chamber 8 and a couple of lock hoppers 9, 9' arranged in parallel. Each of said lock hoppers 9, 9' is connected to said separation chamber 8 through two separate discharge valves 12 and 12'.

The gas-solid separation chamber 8 is located at a point high enough to make possible successive discharge of solids into the lock hoppers 9, 9' essentially by gravity. A decompression stage is performed in the separation chamber 8, where the pressure is kept close to atmospheric pressure, preferably in the range of 0.2-2.0 bar. Gas separated from solid polymer passes through a filter 10 in the upper portion of the separation chamber 8, and is successively recycled to the recycle line R of reactor A by means of line 11. The size of separation chamber 8 is large enough to contain an amount of polymer that allows a smooth transfer of solid to successive stages. In case of sticky or easily compactable polymers, polymer in chamber 8 is kept under fluidisation conditions by recycling a portion of the separated gas into the chamber 8 below a distribution grid (not shown), placed in the bottom part of said separation chamber 8. If appropriate, fluidisation conditions can be supported by mechanical stirring.

Polymer is then transferred to a couple of lock hoppers 9, 9' placed below the separation chamber 8 and above the polymer bed 3 in downstream reactor B. The lock hoppers 9, 9' have a conical lower portion with walls inclined of an angle greater that the repose angle of the polymer granules.

Filling of lock hopper 9 is promoted by opening the discharge valve 12 placed downstream the separation chamber 8 and simultaneously by opening valve 13 placed on line 14, which is a vent pipe allowing to vent into the separation chamber 8 residual gas transferred into lock hopper 9 together with the polymer particles. Likewise, filling of lock hopper 9' is promoted by opening the discharge valve 12' placed downstream the separation chamber 8 and simultaneously by opening valve 13' placed on line 14', which is a vent pipe allowing to vent into the separation chamber 8 residual gas transferred into lock hopper 9' together with the polymer.

Lock hopper 9, 9' are provided, respectively, with bottom discharge valves 15, 15' in connection with the transfer pipes 16, 16', which alternatively transfer the polymer particles into the fluidised polymer bed 3 of the downstream gas-phase reactor. Pipes 16 and 16' are inclined of an angle with respect to vertical line. Preferably said angle is not greater than 45°, more preferably it is comprised between 15° and 30°.

The gas recycle line R', which continuously recycles the fluidisation gas through the polymer bed 3 of the downstream reactor B is connected via line 17 to the upper part of the lock hopper 9. The stream of recycled gas is taken at a point of the recycle line R' located just downstream the compressor 4', upstream the heat exchanger 5'. By opening the pressurization valve 18 the recycled reaction mixture coming from the downstream reactor B can pressurize the lock hopper 9. Likewise, by opening the pressurization valve 18' the recycled reaction mixture coming from line R' of the downstream reactor B can enter the lock hopper 9', thus pressurizing it.

The two hoppers 9 and 9' work intermittently in parallel according to a regular sequence controlled by a central control unit.

Filling of lock hopper 9 is performed by closing valve 15 and opening valves 12 and 13: solids are therefore discharged from chamber 8 and fill hopper 9, while gas entrained with the polymer is vented through valve 13 and returned to the separation chamber 8. Once filling of hopper 9 is completed, valves 12 and 13 are closed, while valves 15 and 18 are opened. Opening of valve 18 causes a pressurisation of hopper 9 by a portion of the reaction gas mixture of reactor B pumped by the compressor 4' through the line 17. The simultaneous opening of the discharge valve 15 allows to discharge polymer by combined effect of pressure and gravity through pipe 16 into the polymer bed 3 of downstream reactor B. Use of a portion of the reaction gas mixture withdrawn just downstream compressor 4' of recycle line R' allows to exploit the full head available from the compressor 4', which makes it possible to transfer polymer from hopper 9 to the reactor B at a high flow rate. When discharge of polymer from hopper 9 is completed, valves 15 and 18 are closed.

The same sequence of operations, but out of phase, is performed by the hopper 9'. While the polymer is transferred from the separation chamber 8 into the first lock hopper 9, the discharge valve 12' is maintained closed. In the meanwhile, during the filling of hopper 9, the valves 15' and 18' are opened, thus causing the pressurization of hopper 9' and, accordingly, the transfer of polymer particles from hopper 9' to the downstream reactor B via pipe 16'.

When filling of hopper 9 is completed, discharge valve 12 is closed and simultaneously valves 12' and 13' are opened, so as to start the filling of the second hopper 9': valves 15' and 18' are closed, so that hopper 9' is filled with the polymer coming from separation chamber 8. During the filling of hopper 9', the valves 15 and 18 are opened, thus causing the pressurization of hopper 9 and, accordingly, the transfer of polymer particles from hopper 9 to the downstream reactor B via pipe 16.

Pressure is released from hopper 9' through a valve 19 mounted on a line 20 leading to a separation chamber 21 of the reactor B, having the same design as that of reactor A, where a gas mixture is separated from the polymer discharged from the reactor B. Said gas mixture, after being recompressed, is reintroduced via line 22 into the recycle line R' of the reactor B. When pressures have been balanced, a new transfer cycle can be performed.

The polymer coming from downstream reactor B is continuously degassed and discharged from the separation chamber 21 via line 23 and may be transferred to a successive polymerization reactor or to a finishing treatment stage, as it is known to the person skilled in the art.

It is apparent that the transfer device of present invention makes possible a continuous transfer of polymer from reactor A to reactor B, since while one of the two lock hoppers is filled with polymer coming from chamber 8, the other lock hopper is emptied, thus transferring polymer into the downstream reactor B. The result is that polymer is transferred without any interruption into the downstream reactor B by means of pipes 16 and 16'.

Optionally the pipes 16, 16' may be continuously flushed by a portion of the reaction gas mixture withdrawn from the line 17, so that any deposit of solid in said pipes is avoided.

The design of the transfer device and the operative sequence of gas/solid separation in step a) and polymer loading/pressurisation-transfer in step b) are such that the level of polymer in separation chamber 8 is almost constant. Typically valves 15, 18 and 15', 18' are actuated by a signal triggered by the level of solid in the separation chamber 8.

The olefin monomers polymerized by the process of the invention have formula CH₂=CHR, where R is hydrogen or a hydrocarbon radical having 1-12 carbon atoms. Examples of polyolefins that can be obtained are:
- high-density polyethylene (HDPE having a relative density higher than 0.940) including ethylene homopolymers and ethylene copolymers with α-olefins having 3 to 12 carbon atoms;
- linear polyethylene of low density (LLDPE having a relative density lower than 0.940) and of very low density and ultra low density (VLDPE and ULDPE having a relative density lower than 0.920 down to 0.880) consisting of ethylene copolymers with one or more α-olefins having 3 to 12 carbon atoms;
- elastomeric terpolymers of ethylene and propylene with minor proportions of diene or elastomeric copolymers of ethylene and propylene with a content of units derived from ethylene of between about 30 and 70% by weight;
- isotactic polypropylene and crystalline copolymers of propylene and ethylene and/or other α-olefins having a content of units derived from propylene of more than 85% by weight;
- isotactic copolymers of propylene and α-olefins, such as 1-butene, with an α-olefin content of up to 30% by weight;
- impact-resistant propylene polymers obtained by sequential polymerization of propylene and mixtures of propylene with ethylene containing up to 30% by weight of ethylene;
- atactic polypropylene and amorphous copolymers of propylene and ethylene and/or other α-olefins containing more than 70% by weight of units derived from propylene.

The multistage olefin polymerization herewith described is not restricted to the use of any particular family of polymerization catalysts. The invention is useful in any exothermic polymerization reaction employing any catalyst, whether it is supported or unsupported, and regardless of whether it is in pre-polymerized form.

The polymerization reaction can be carried out in the presence of highly active catalytic systems, such as Ziegler-Natta catalysts, single site catalysts, chromium-based catalysts, vanadium-based catalysts.

A Ziegler-Natta catalyst system comprises the catalysts obtained by the reaction of a transition metal compound of groups 4 to 10 of the Periodic Table of Elements (new notation) with an organometallic compound of group 1, 2, or 13 of the Periodic Table of element.

In particular, the transition metal compound can be selected among compounds of Ti, V, Zr, Cr, and Hf. Preferred compounds are those of formula Ti(OR)ₙX_{y-n} in which n is comprised between 0 and y; y is the valence of titanium; X is halogen and R is a hydrocarbon group having 1-10 carbon atoms or a COR group. Among them, particularly preferred are titanium compounds having at least one Ti-halogen bond such as titanium tetrahalides or halogenalcoholates. Preferred specific titanium compounds are TiCl₃, TiCl₄, Ti(OBu)₄, Ti(OBu)Cl₃, Ti(OBu)₂Cl₂, Ti(OBu)₃Cl.

Preferred organometallic compounds are the organo-Al compounds and in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as AlEt₂Cl and Al₂Et₃Cl₃ optionally in mixture with said trialkyl aluminum compounds.

Particularly suitable high yield ZN catalysts are those wherein the titanium compound is supported on magnesium halide in active form which is preferably MgCl₂ in active form. Particularly for the preparation crystalline polymers of CH₂CHR olefins, where R is a C1 C10 hydrocarbon group, internal electron donor compounds can be supported on the MgCl₂. Typically, they can be selected among esters, ethers, amines, and ketones. In particular, the use of compounds belonging to 1,3-diethers, cyclic ethers, phthalates, benzoates, acetates and succinates is preferred.

When it is desired to obtain a highly isotactic crystalline polypropylene, it is advisable to use, besides the electron-donor present in the solid catalytic component, an external electron-donor (ED) added to the aluminium alkyl co-catalyst component or to the polymerization reactor. These external electron donors can be selected among alcohols, glycols, esters, ketones, amines, amides, nitriles, alkoxysilanes and ethers. The electron donor compounds (ED) can be used alone or in mixture with each other. Preferably the ED compound is selected among aliphatic ethers, esters and alkoxysilanes. Preferred ethers are the C2-C20 aliphatic ethers and in particular the cyclic ethers preferably having 3-5 carbon atoms, such as tetrahydrofurane (THF), dioxane.

Preferred esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate.

The preferred alkoxysilanes are of formula Rₐ¹R_{b}²Si(OR³)_{c}, where a and b are integer from 0 to 2, c is an integer from 1 to 3 and the sum (a+b+c) is 4; R¹, R², and R³, are alkyl, cycloalkyl or aryl radicals with 1-18 carbon atoms. Particularly preferred are the silicon compounds in which a is 1, b is 1, c is 2, at least one of R¹ and R² is selected from branched alkyl, cycloalkyl or aryl groups with 3-10 carbon atoms and R³ is a C₁-C₁₀ alkyl group, in particular methyl.

Other useful catalysts are the vanadium-based catalysts, which comprise the reaction product of a vanadium compound with an aluminum compound, optionally in the presence of a halogenated organic compound. Optionally the vanadium compound can be supported on an inorganic carrier, such as silica, alumina, magnesium chloride. Suitable vanadium compounds are VCl₄, VCl₃, VOCl₃, vanadium acetyl acetonate.

Other useful catalysts are those based on chromium compounds, such as chromium oxide on silica, also known as Phillips catalysts.

Other useful catalysts are single site catalysts, for instance metallocene-based catalyst systems which comprise:
- at least a transition metal compound containing at least one II bond;
- at least an alumoxane or a compound able to form an alkylmetallocene cation; and optionally an organo-aluminum compound.

A preferred class of metal compounds containing at least one n bond are metallocene compounds belonging to the following formula (I):

Cp(L)qAMXp (I)

wherein M is a transition metal belonging to group 4, 5 or to the lanthanide or actinide groups of the Periodic Table of the Elements; preferably M is zirconium, titanium or hafnium;
the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a hydrocarbon radical containing from 1 to 40 carbon atoms; preferably, the substituents X are selected from the group consisting of -Cl, -Br, -Me, -Et, -n-Bu, -sec-Bu, - Ph, -Bz, -CH₂SiMe₃, -OEt, -OPr, -OBu, -OBz and -NMe₂;
p is an integer equal to the oxidation state of the metal M minus 2;
n is 0 or 1; when n is 0 the bridge L is not present;
L is a divalent hydrocarbon moiety containing from 1 to 40 carbon atoms, optionally containing up to 5 silicon atoms, bridging Cp and A, preferably L is a divalent group (ZR⁷₂)ₙ; Z being C, Si, and the R⁷ groups, equal to or different from each other, being hydrogen or a hydrocarbon radical containing from 1 to 40 carbon atoms;
more preferably L is selected from Si(CH₃)₂, SiPh₂, SiPhMe, SiMe(SiMe₃), CH₂, (CH₂)₂, (CH₂)₃ or C(CH₃)₂;
Cp is a substituted or unsubstituted cyclopentadienyl group, optionally condensed to one or more substituted or unsubstituted, saturated, unsaturated or aromatic rings;
A has the same meaning of Cp or it is a NR⁷, -O, S, moiety wherein R⁷ is a hydrocarbon radical containing from 1 to 40 carbon atoms;

Alumoxanes used as component b) are considered to be linear, branched or cyclic compounds containing at least one group of the type: 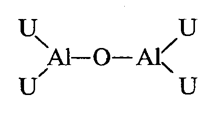 wherein the substituents U, same or different, are defined above.

In particular, alumoxanes of the formula: 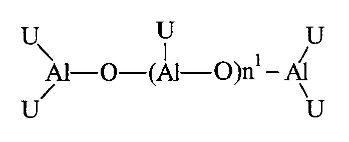 can be used in the case of linear compounds, wherein n¹ is 0 or an integer of from 1 to 40 and where the U substituents, same or different, are hydrogen atoms, halogen atoms, C₁-C₂₀-alkyl, C₃-C₂₀-cyclalkyl, C₆-C₂₀-aryl, C₇-C₂₀-akylaryl or C₇-C₂₀-arylalkyl radicals, optionally containing silicon or germanium atoms, with the proviso that at least one U is different from halogen, and j ranges from 0 to 1, being also a non-integer number; or alumoxanes of the formula: 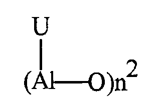 can be used in the case of cyclic compounds, wherein n² is an integer from 2 to 40 and the U substituents are defined as above.

The catalyst may suitably be employed in the form of a pre-polymer powder prepared beforehand during a pre-polymerization stage with the aid of a catalyst as described above. The pre-polymerization may be carried out by any suitable process, for example, polymerization in a liquid hydrocarbon diluent or in the gas phase using a batch process, a semi-continuous process or a continuous process.

The following examples will further illustrate the present invention without limiting its scope.

### EXAMPLES

### Characterization

| | |
|---|---|
| Melt index L (MIL) [dg/min]: | measured according to ISO 1133 |
| Flexural elasticity modulus (MEF) [MPa]: | measured according to ISO 178 |
| IZOD at 23°C [kJ/m²]: | measured according to ISO 180 |

### Solubility index (XS) [wt%]

The following method is used to determine the percent of homopolymer or copolymer polypropylene soluble in ortho-xylene at 25°C.

A weighed amount of sample is dissolved in ortho-xylene at 135°C: the solution is cooled under controlled conditions and maintained at 25°C so that the insoluble material precipitates. The precipitate is then filtered, and after filtration an aliquot of filtered solution is evaporated and weighed (total solubles).

### EXAMPLE 1

A heterophasic propylene copolymer is produced by means of a process setup comprising:
- a precontacting vessel (not shown in Fig. 1) for the pre-contact of the catalyst components;
- a first fluidised bed reactor A to produce a crystalline polypropylene;
- a separation chamber 8 to carry out step a) of present invention;
- a couple of lock hoppers 9,9' to carry out step b) of present invention;
- a second fluidised bed reactor B to produce an ethylene/propylene copolymer.

### Catalyst Activation

A Ziegler-Natta catalyst system was used as the polymerization catalyst, comprising:
- a titanium solid catalyst component prepared with the procedure described in EP 395 083, Example 3, according to which diisobutyl phthalate is the internal donor;
- triethylaluminium (TEAL) as the cocatalyst;
- dicyclopentyldimethoxysilane (DCPMS) as the external donor.

The above solid catalyst component (hereinafter referred as the "sol.cat.") is fed to the pre-contacting vessel, the weight ratio TEAL/sol.cat being of 5, the weight ratio TEAL/DCPMS being of 5. The above components were pre-contacted at a temperature of 25°C for 10 minutes.

### Multistage Polymerization

Propylene is polymerized in the first gas-phase reactor A using H₂ as the molecular weight regulator and in the presence of propane as inert diluent. No comonomer is fed to this reactor. Make-up propane, propylene and hydrogen as molecular weight regulator are fed to this reactor. The polymerization of propylene is carried out at a temperature of 80°C and at a pressure of 20 bar.

The composition of the gas phase in the fluidized bed reactor A is specified in Table 1, as well as the production split (% wt) of the 1^{st} reactor. The fraction soluble in xylene of the polypropylene resin is of 2.3% by weight.

The obtained semi-crystalline polypropylene is continuously discharged, together with the accompanying gas mixture, from the fluidized bed reactor A by means of discharge valve 6 and conveyed via line 7 to the gas-solid separation chamber 8, which is operated at a pressure of 1.4 bar and a temperature of 75°C.

The gas mixture separated from the solid polymer passes through a bag filter 10 in the upper portion of the separation chamber 8, and is successively recycled to the recycle line R of first gas-phase reactor A. The degassed polypropylene particles are then transferred to a couple of lock hoppers 9, 9' placed below the separation chamber 8 and above the polymer bed 3 of the downstream fluidised bed reactor B.

The two hoppers 9 and 9' work intermittently in parallel according to the operative steps explained in connection to the description of Fig. 1. When one of the hoppers is involved with filling of polymer coming from the separation chamber 8, the other hopper is pressurized by means of the gas mixture coming from the recycle line R' of the second gas-phase reactor B.

Lock hoppers 9, 9' are provided, respectively, with bottom discharge valves 15, 15' in connection with the transfer pipes 16, 16', which alternatively transfer the polymer particles into the fluidised polymer bed 3 of the downstream gas-phase reactor B.

In particular, the polymer falls by gravity from the separation chamber 8 into the lock hopper 9 or 9' and during the filling step the pressure inside each lock hopper is decreased to the same value existing in the separation chamber 8 (i.e. 1.4 bar) by opening the vent valves 13 or 13'. On the contrary, when the polymer is discharged from each lock hopper 9 or 9' and passes to the downstream gas-phase reactor B, each lock hopper is pressurized at the pressure existing downstream the compressor 4' in the recycle line R' of the second gas-phase reactor B. An ethylene/propylene copolymer is prepared in the fluidized bed reactor B according to the operative conditions shown in Table 1: the gas-phase polymerization in reactor B is carried out at a temperature of 70°C and at a pressure of 17 bar. Taking into account that the pressure head provided by the compressor 4' is of about 2 bar, the lock hopper pressure during the emptying step is of about 19 bar. Thus, the pressure inside each lock hoppers 9, 9' continuously oscillates from a minimum value of about 1.4 bar and a maximum value of about 19 bar.

The rubbery ethylene/propylene copolymer obtained in the reactor B is characterized by solubility in xylene of 68% by weight. The heterophasic propylene copolymer deriving from the above sequential polymerization is continuously discharged from the second gas-phase reactor via the discharge valve 6'.

The transfer device of the invention allows the operation of the two gas-phase polymerization reactors A and B at different monomer compositions, without any significant contamination of downstream reactor B from the reaction gas mixture present in upstream reactor A.

In Table 2 some structural properties (MIL, XS, C₂H₄ content) and some mechanical properties (IZOD, flexural modulus) of this heterophasic copolymer are indicated. The optimal balance of the mechanical properties makes this heterophasic copolymer suitable to be used to produce items in the automotive field.

### EXAMPLE 2

A heterophasic propylene copolymer is produced by means of the same process setup of Example 1.

The same Ziegler-Natta catalyst system of Example 1 was used as the polymerization catalyst. The catalyst components were introduced into the pre-contacting vessel together with propylene, at a weight ratio propylene/sol.cat of 1.0. The above components were pre-contacted at a temperature of 15°C for 10 minutes.

### Multistage Polymerization

Propylene is polymerized in the first gas-phase reactor A using H₂ as the molecular weight regulator and in the presence of propane as inert diluent. No comonomer is fed to this reactor. Make-up propane, propylene and hydrogen as molecular weight regulator are fed to this reactor. The polymerization of propylene is carried out at a temperature of 80°C and at a pressure of 20 bar.

The composition of the gas phase in the fluidized bed reactor A is specified in Table 1, as well as the production split (% wt) of the 1^{st} reactor. The fraction soluble in xylene of the polypropylene resin is of 2.0% by weight.

The obtained semi-crystalline polypropylene is continuously discharged, together with the accompanying gas mixture, from the reactor A by means of discharge valve 6 and conveyed via line 7 to the gas-solid separation chamber 8, which is operated at a pressure of 1.6 bar and a temperature of 75°C.

The gas mixture separated from the solid polymer passes through a bag filter 10 in the upper portion of the separation chamber 8, and is successively recycled to the recycle line R of first gas-phase reactor A.

The degassed polypropylene particles are then transferred to the couple of lock hoppers 9, 9'. The polymer falls by gravity from the separation chamber 8 into the lock hopper 9 or 9' and during the filling step the pressure inside each lock hopper is decreased to the same value existing in the separation chamber 8 (i.e. 1.6 bar) by opening the vent valves 13 or 13'. On the contrary, when the polymer is discharged from each lock hopper 9 or 9' and passes to the downstream gas-phase reactor B, each lock hopper is pressurized at the pressure existing downstream the compressor 4' in the recycle line R' of the second gas-phase reactor B. An ethylene/propylene copolymer is prepared in the fluidized bed reactor B according to the operative conditions shown in Table 1: the gas-phase polymerization in reactor B is carried out at a temperature of 75°C and at a pressure of 18 bar. Taking into account that the pressure head provided by the compressor 4' is of about 2 bar, the lock hopper pressure during the emptying step is of about 20 bar. Thus, the pressure inside each lock hoppers 9, 9' continuously oscillates from a minimum value of about 1.6 bar to a maximum value of about 20 bar.

The rubbery copolymer obtained in the reactor B is characterized by solubility in xylene of 80% by weight. The heterophasic propylene copolymer deriving from the above sequential polymerization is continuously discharged from the second gas-phase reactor via the discharge valve 6'.

The transfer device of the invention allows the operation of the two gas-phase polymerization reactors A and B at different monomer compositions, without any significant contamination of downstream reactor B from the reaction gas mixture present in upstream reactor A.

In Table 2 some structural properties (MIL, XS, C₂H₄ content) and some mechanical properties (IZOD, flexural modulus) of the obtained heterophasic propylene copolymer are indicated.

**TABLE 1- Polymerization Conditions**

| **Operative conditions -1^{st} Reactor** | **EXAMPLE 1** | **EXAMPLE 2** |
|---|---|---|
| Temperature (°C) | **80** | **80** |
| Pressure (bar) | **20** | **20** |
| H₂(mol%) | **0.2** | **2.3** |
| C₃H₆(mol%) | **54.8** | **57.7** |
| C₃H₈ (mol%) | **45.0** | **40** |
| C₂H₄(mol%) | - | **-** |
| Split (wt%) | **60** | **70** |

| **Operative conditions - 2^{nd} Reactor** | | |
|---|---|---|
| Temperature (°C) | **70** | **75** |
| Pressure (bar) | **17** | **18** |
| H₂ (mol%) | - | **3.9** |
| C₃H₆(mol%) | **22.3** | **16.4** |
| C₃H₈ (mol%) | **73.1** | **60.9** |
| C₂H₄(mol%) | **4.6** | **18.8** |

**TABLE 2 - FINAL COPOLYMER**

| | MIL (dg/min) | XS (wt%) | C₂H₄ (wt%) | IZOD at 23° (kJ/m²) | Flexural Mod. (Mpa) |
|---|---|---|---|---|---|
| Example 1 | 0.52 | 28.4 | 10.1 | 70 | 900 |
| Example 2 | 13.7 | 25.3 | 21.0 | 50 | 1100 |

## Claims

1. A process for the multistage polymerization of olefins comprising a gas-phase polymerization carried out in at least two serially connected gas-phase reactors, the continuous discharge of polymer and gas reaction mixture from an upstream reactor into a transfer device and the continuous feeding of polymer from said transfer device to a downstream reactor, said transfer device comprising:
a) a separation chamber in which said gas reaction mixture is removed from the polymer;
b) at least a couple of lock hoppers working intermittently in parallel, where one of said lock hoppers is continuously filled with the polymer coming from step a), while simultaneously the other one is continuously pressurized by means of a gas comprising the reaction mixture coming from said downstream reactor.

2. The process according to claim 1, wherein said gas-phase reactors are selected from fluidized bed reactors, stirred bed reactors and polymerization reactors having two distinct interconnected polymerization zones.

3. The process according to claim 1, wherein said gas-phase reactors are operated at temperature in a range from 50 to 120°C

4. The process according to claim 1, wherein said gas-phase reactors are operated at a pressure in a range from 10 to 30 bar.

5. The process according to claim 1, wherein the pressure in the separation chamber of step a) is decreased at values in a range from 0.2 to 3.0 bar.

6. The process according to claim 1, wherein said lock hoppers operate in a continuous way this sequence of operations:
(1) loading with polymer coming from step a), while maintaining the hopper isolated from the downstream reactor;
(2) pressurization by means of a gas comprising the reaction mixture from the downstream reactor, while maintaining the hopper isolated from the separation chamber of step a).

7. The process according to claim 6, wherein during said pressurization (2) the polymer is discharged from said lock hopper and transferred to the downstream reactor.

8. The process according to claim 6, where when one of said lock hoppers is involved with step (1), the other one is involved with step (2).

9. The process according to claim 1, wherein said pressurization gas of step b) comes from the recycle line of said downstream reactor at a point downstream the compressor and upstream the heat exchanger.

10. An apparatus for the multistage polymerization of olefins, comprising at least two serially connected gas-phase reactors and a transfer device transferring the polymer from the upstream reactor to the downstream reactor, each reactor having an external recycle line (R, R') that continuously recycles the fluidization gas through said reactors, said line (R, R') being equipped with a compressor and a heat exchanger downstream said compressor, said transfer device comprising:
- a gas/solid separation chamber placed downstream said upstream reactor;
- a couple of lock hoppers, placed in a parallel arrangement, directly connected to said recycle line R' of said downstream reactor and in connection with the polymerization zone of said downstream reactor,
wherein each of said lock hoppers is connected to said separation chamber through two separate discharge valves.

11. The apparatus according to claim 10, wherein said couple of lock hoppers is placed below said separation chamber and above the polymer bed of said downstream reactor.

12. The apparatus according to claim 10, wherein said lock hoppers are provided with bottom discharge valves, connected with two transfer pipes, which alternatively transfer the polymer particles into the polymer bed of said downstream reactor.

13. The apparatus according to claim 12, wherein said two transfer pipes are inclined of an angle, with respect to vertical line, comprised between 15° and 30°.

## Patentansprüche

1. Verfahren für die mehrstufige Polymerisation von Olefinen, umfassend eine in mindestens zwei hintereinandergeschalteten Gasphasenreaktoren durchgeführte Gasphasenpolymerisation, die kontinuierliche Abgabe eines Reaktionsgemisches aus Polymer und Gas aus einem stromaufwärtigen Reaktor in eine Überleitungsvorrichtung und das kontinuierliche Einspeisen von Polymer aus der Überleitungsvorrichtung in einen stromabwärtigen Reaktor, wobei die Überleitungsvorrichtung Folgendes umfasst:
a) eine Trennkammer, in welcher das Gasreaktionsgemisch von dem Polymer entfernt wird;
b) wenigstens zwei Schleusentrichter, die intermittierend parallel zueinander arbeiten, wobei einer der Schleusentrichter kontinuierlich mit dem aus Schritt a) kommenden Polymer gefüllt wird, während gleichzeitig der andere mit Hilfe eines Gases, welches das von dem stromabwärtigen Reaktor kommende Reaktionsgemisch umfasst, kontinuierlich mit Druck beaufschlagt wird.

2. Verfahren nach Anspruch 1, wobei die Gasphasenreaktoren ausgewählt sind aus Wirbelschichtreaktoren, Rührbettreaktoren und Polymerisationsreaktoren mit zwei separaten, miteinander verbundenen Polymerisationszonen.

3. Verfahren nach Anspruch 1, wobei die Gasphasenreaktoren bei einer Temperatur im Bereich von 50 bis 120°C betrieben werden.

4. Verfahren nach Anspruch 1, wobei die Gasphasenreaktoren bei einem Druck im Bereich von 10 bis 30 bar betrieben werden.

5. Verfahren nach Anspruch 1, wobei der Druck in der Trennkammer von Schritt a) auf Werte im Bereich von 0,2 bis 3,0 bar herabgesetzt wird.

6. Verfahren nach Anspruch 1, wobei die Schleusentrichter diese Abfolge von Schritten kontinuierlich durchführen:
(1) Beschicken mit aus Schritt a) kommendem Polymer, wobei der Trichter von dem stromabwärtigen Reaktor isoliert gehalten wird;
(2) Druckbeaufschlagung mit Hilfe eines Gases, welches das Reaktionsgemisch aus dem stromabwärtigen Reaktor umfasst, wobei der Trichter von der Trennkammer von Schritt a) isoliert gehalten wird.

7. Verfahren nach Anspruch 6, wobei das Polymer während der Druckbeaufschlagung (2) aus dem Schleusentrichter ausgeleitet und zu dem stromabwärtigen Reaktor geleitet wird.

8. Verfahren nach Anspruch 6, wobei dann, wenn einer der Schleusentrichter mit Schritt (1) zu tun hat, der andere mit Schritt (2) zu tun hat.

9. Verfahren nach Anspruch 1, wobei das Druckbeaufschlagungsgas von Schritt b) aus der Rückführleitung des stromabwärtigen Reaktors an einem Punkt stromabwärts von dem Verdichter und stromaufwärts von dem Wärmetauscher kommt.

10. Vorrichtung für die mehrstufige Polymerisation von Olefinen, umfassend mindestens zwei hintereinandergeschaltete Gasphasenreaktoren und eine Überleitungsvorrichtung, die das Polymer von dem stromaufwärtigen Reaktor zu dem stromabwärtigen Reaktor leitet, wobei jeder Reaktor eine externe Rückführleitung (R, R') besitzt, die das Fluidisierungsgas kontinuierlich durch die Reaktoren führt, wobei die Leitung (R, R') mit einem Verdichter und einem dem Verdichter nachgeschalteten Wärmetauscher ausgestattet ist, wobei die Überleitungsvorrichtung Folgendes umfasst:
- eine Gas/Feststoff-Trennkammer, die dem stromaufwärtigen Reaktor nachgeschaltet ist;
- zwei Schleusentrichter, die in einer parallelen Anordnung platziert sind, mit der Rückführleitung R' des stromabwärtigen Reaktors direkt verbunden sind und mit der Polymerisationszone des stromabwärtigen Reaktors in Verbindung stehen;
wobei jeder der Schleusentrichter über zwei separate Auslassventile mit der Trennkammer verbunden ist.

11. Vorrichtung nach Anspruch 10, wobei die zwei Schleusentrichter unter der Trennkammer und über dem Polymerbett des stromabwärtigen Reaktors platziert sind.

12. Vorrichtung nach Anspruch 10, wobei die Schleusentrichter mit unteren Auslassventilen versehen sind, die mit zwei Überleitungsrohren verbunden sind, welche die Polymerpartikel alternativ in das Polymerbett des stromabwärtigen Reaktors leiten.

13. Vorrichtung nach Anspruch 12, wobei die Überleitungsrohre in einem Winkel zur Vertikalen im Bereich zwischen 15° und 30° geneigt sind.

## Revendications

1. Procédé pour la polymérisation à plusieurs étapes d'oléfines comportant une polymérisation en phase gazeuse réalisée dans au moins deux réacteurs à phase gazeuse raccordés en série, le déchargement continu du polymère et du mélange réactionnel gazeux à partir d'un réacteur en amont dans un dispositif de transfert et l'alimentation continue du polymère dudit dispositif de transfert dans un réacteur en aval, ledit dispositif de transfert comportant :
a) une chambre de séparation dans laquelle le mélange réactionnel gazeux est éliminé du polymère ;
b) au moins un couple de trémies à verrouillage fonctionnant par intermittence en parallèle, où une desdites trémies à verrouillage est remplie de manière continue avec le polymère venant de l'étape a), alors que simultanément l'autre est pressurisée de manière continue au moyen d'un gaz comportant le mélange réactionnel venant dudit réacteur en aval.

2. Procédé selon la revendication 1, où lesdits réacteurs à phase gazeuse sont choisis parmi les réacteurs à lit fluidisé, les réacteurs à lit agité et les réacteurs de polymérisation présentant deux zones distinctes de polymérisation interconnectées.

3. Procédé selon la revendication 1, où lesdits réacteurs à phase gazeuse sont exploités à une température dans une plage de 50 à 120°C.

4. Procédé selon la revendication 1, où lesdits réacteurs à phase gazeuse sont exploités à une pression dans une plage de 10 à 30 bars.

5. Procédé selon la revendication 1, selon lequel la pression dans la chambre de séparation de l'étape a) est diminuée à des valeurs dans une plage de 0,2 à 3,0 bars.

6. Procédé selon la revendication 1, où lesdites trémies à verrouillage opèrent de manière continue cette séquence d'opérations :
(1) chargement avec du polymère venant de l'étape a), tout en maintenant la trémie isolée du réacteur en aval ;
(2) pressurisation au moyen d'un gaz comportant le mélange réactionnel du réacteur en aval, tout en maintenant la trémie isolée de la chambre de séparation de l'étape a).

7. Procédé selon la revendication 6, où pendant ladite pressurisation (2) le polymère est déchargé de ladite trémie à verrouillage et transféré au réacteur en aval.

8. Procédé selon la revendication 6, où, quand une desdites trémies à verrouillage est impliquée dans l'étape (1), l'autre est impliquée dans l'étape (2).

9. Procédé selon la revendication 1, où ledit gaz de pressurisation de l'étape b) vient de la conduite de recyclage dudit réacteur en aval en un point en aval du compresseur et en amont de l'échangeur de chaleur.

10. Appareil pour la polymérisation à plusieurs étapes d'oléfines, comportant au moins deux réacteurs à phase gazeuse raccordés en série et un dispositif de transfert transférant le polymère du réacteur en amont au réacteur en aval, chaque réacteur présentant une conduite de recyclage externe (R, R') qui recycle de manière continue le gaz de fluidisation à travers lesdits réacteurs, ladite conduite (R, R') étant équipée d'un compresseur et d'un échangeur de chaleur en aval dudit compresseur, ledit dispositif de transfert comportant :
- une chambre de séparation gaz/solide placée en aval dudit réacteur en amont ;
- un couple de trémies à verrouillage, placées en un agencement parallèle, directement raccordées à ladite conduite de recyclage R' dudit réacteur en aval et en connexion avec la zone de polymérisation dudit réacteur en aval ;
où chacune desdites trémies à verrouillage est raccordée à ladite chambre de séparation par deux vannes de déchargement séparées.

11. Appareil selon la revendication 10, où ledit couple de trémies de verrouillage est placé sous ladite chambre de séparation et au-dessus du lit de polymère dudit réacteur en aval.

12. Appareil selon la revendication 10, où lesdites trémies à verrouillage sont munies de vannes de déchargement de fond, raccordées avec deux tuyaux de transfert, qui transfèrent de manière alternée les particules de polymère dans le lit de polymère dudit réacteur en aval.

13. Appareil selon la revendication 12, où lesdits deux tuyaux de transfert sont inclinés d'un angle, par rapport à la verticale, compris entre 15° et 30°.
